(19) Europäisches Patentamt
European Patent Office
Office européen des brevets

(11) **EP 4 303 611 A1**

(12) **EUROPEAN PATENT APPLICATION**

(43) Date of publication:
**10.01.2024 Bulletin 2024/02**

(21) Application number: **22275093.7**

(22) Date of filing: **08.07.2022**

(51) International Patent Classification (IPC):
***G01S 7/292*** (2006.01)

(52) Cooperative Patent Classification (CPC):
**G01S 7/2927**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Warwick House
P.O. Box 87
Farnborough Aerospace Centre
Farnborough Hampshire GU14 6YU (GB)**

(54) **IMPROVEMENTS IN AND RELATING TO RADARS**

(57) Disclosed is a RADAR system comprising a Constant False Alarm Rate, CFAR, function, wherein the CFAR function is arranged such that a detection threshold is determined at least partly on the basis of a window length which is of a variable length and the variable length is determined on the basis of a degree of variability in a first number of previous amplitude measurements of received signals.

Fig.2

**Description**

FIELD

The present invention relates to RADARs. More specifically, it relates to Cognitive RADARs. A cognitive RADAR is defined as a RADAR system that in some sense displays intelligence, adapting its operation and its processing in response to a changing environment and target scene More specifically still, the present invention relates to improvements in the use of Constant False Alarm Rate, CFAR, techniques in a Cognitive RADAR system.

BACKGROUND

RADAR systems are used in a variety of settings, both civilian and military. A key feature in most or all RADAR systems is the ability to distinguish a genuine target from noise or clutter. In this context, target refers to an object which it is desired to locate, identify or track. It does not necessarily mean a target in a military sense. Clutter refers to unwanted returns from e.g. ground, sea, rain, animals/insects, chaff and atmospheric turbulences, and can cause serious performance issues with RADAR systems.

In order to assist in distinguishing genuine targets from noise or clutter, a technique known as CFAR is often used. The role of CFAR is to determine the power threshold above which any return can be considered to probably originate from a genuine target as opposed to a spurious source, such as clutter. If this threshold is too low, then more real targets will be detected, but at the expense of increased numbers of false alarms. Conversely, if the threshold is too high, then fewer targets will be detected, but the number of false alarms will also be low. In most RADAR detectors, the threshold is set in order to achieve a required probability of false alarm (or equivalently, false alarm rate or time between false alarms).

In a civil aviation setting, for instance, the problem of clutter is qualitatively and quantitatively different to a maritime setting. In the former, the landscape is substantially static, whereas in the latter, wave crests in particular, present a dynamic environment which may exhibit a wide range of clutter responses between flat calm and stormy conditions. Maritime in this context refers to a RADAR installed on land, but operable to scan a body of water or a RADAR installed on a marine vessel.

It is an aim of embodiments of the present invention to provide a better performing RADAR system, particularly a cognitive RADAR system.

SUMMARY

According to a first aspect of the present invention, there is provided a RADAR system comprising a Constant False Alarm Rate, CFAR, function, wherein the CFAR function is arranged such that a detection threshold is determined at least partly on the basis of a window length which is of a variable length and the variable length is determined on the basis of a degree of variability in a first number of previous amplitude measurements of received signals.

In an embodiment, the degree of variability is classified on the basis of one or more thresholds.

In an embodiment, the one or more thresholds are arranged to be one of: fixed at time of configuration or variable under the control of an operator.

In an embodiment, the CFAR function is arranged such that a square of an amplitude value of a Cell Under Test, CUT, is compared with squares of the values of the first number of previous amplitude measurements and the degree of variability is classified as high, medium or low according to three thresholds.

In an embodiment, the one or more thresholds are fixed and are arranged such that: a high degree of variability is determined if a top 10% of measurements are divergent from a recent mean; a medium degree of variability is determined if a middle-high 20% of measurements are divergent from the recent mean; and a low degree of variability is determined if a bottom 70% of measurements are divergent from the recent mean.

In an embodiment, the window length is arranged to be longer for a relatively lower degree of variability, and shorter for a relatively higher degree of variability.

In an embodiment, the CFAR function is further arranged such that an amplitude of a received pulse in a current Cell Under Test, CUT, is compared to a plurality of recently received pulses to determine if the current CUT lies in an upper range of recently received pulses and, if so, a predetermined false alarm rate is applied for the current cell, wherein the predetermined false alarm rate is lower than would be applied if the current CUT did not lie in the upper range.

According to a second aspect of the present invention, there is provided method of CFAR signal processing in a RADAR system, comprising the steps of:

determining a degree of variability in a first number of previous amplitude measurements of received signals;

assigning a CFAR window length on the basis of the determined degree of variability;

setting a detection threshold for CFAR operation on the basis of the assigned window length.

In an embodiment, the degree of variability is classified on the basis of one or more thresholds.

In an embodiment, the one or more thresholds are arranged to be one of: fixed at time of configuration or variable under the control of an operator.

In an embodiment, a square of an amplitude value of a Cell Under Test, CUT, is compared with squares of the values of the first number of previous amplitude measurements and the degree of variability is classified as high, medium or low according to three thresholds.

In an embodiment, the one or more thresholds are fixed and are arranged such that: a high degree of variability is determined if a top 10% of measurements are divergent from a recent mean; a medium degree of variability is determined if a middle-high 20% of measurements are divergent from the recent mean; and a low degree of variability is determined if a bottom 70% of measurements are divergent from the recent mean.

In an embodiment, the window length is arranged to be longer for a relatively lower degree of variability, and shorter for a relatively higher degree of variability.

In an embodiment, the method further comprises the steps of comparing an amplitude of a received pulse in a current CUT with a plurality of recently received pulses, determining if the amplitude of the pulse in the current CUT lies in an upper range of recently received pulses and if it so determined, selecting a predefined false alarm rate is selected which is lower than would be applied if the current CUT did not lie in the upper range

BRIEF DESCRIPTION OF THE FIGURES

Embodiments of the invention will now be described by way of example only with reference to the figures, in which:

Figure 1 shows a diagram illustrating the operation of CFAR as known in the prior art;

Figure 2 shows a schematic of a RADAR system according to an embodiment of the present invention;

Figure 3 shows a more detailed view of certain elements of a RADAR system according to an embodiment of the present invention;

Figure 4 shows a plot of an example dataset, with higher range in clutter amplitudes, with relatively high and low regions lingering for several thousand pulses (~20 seconds);

Figure 5 shows a plot of an example dataset, with opposite relative clutter motion to that shown in Figure 4 and with less range in amplitude (noise-like with occasional spikes) for majority of dataset; and

Figure 6 shows a flowchart illustrating a method according to an embodiment of the present invention; and

Figure 7 shows a flowchart illustrating a method according to an embodiment of the present invention.

DETAILED DESCRIPTION

In a typical RADAR configuration, CFAR is configured in a static manner and is intended to provide acceptable performance in a range of possible scenarios. Since the CFAR in such a system is static, it can take no account of contemporaneous information about its present setting. It is, by its very nature, a compromise. In fact, CFAR is not optimised in any way for land or marine/maritime settings and is simply a broad compromise intended to be used for any situation. The skilled person will typically consider CFAR to be set of fixed, unvarying, parameters which are "hard-wired" into the RADAR system.

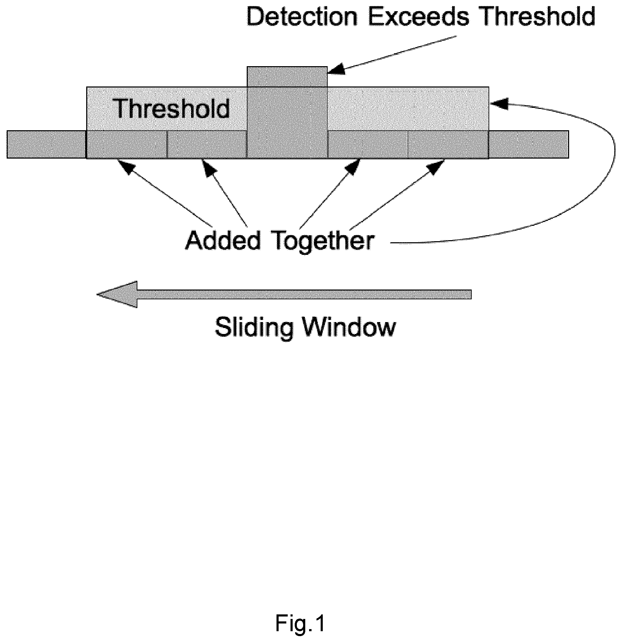

Figure 1 shows a basic illustration of how CFAR operates in a prior art RADAR system. The central cell is the Cell Under Test, CUT, and the two adjacent cells on each side are added and multiplied by a constant to establish a threshold. Detection occurs when the cell under test exceeds the threshold. In the example shown, the CUT exceeds the threshold which is established and so corresponds to a genuine target. The actual number of cells which are considered when determining the threshold is referred to as a "window length" and this has an influence on the threshold which is applied, as does the multiplier used. The various parameters are established to give an adequate performance in all scenarios but is not optimised for any particular setting.

Embodiments of the present invention provide a CFAR configuration which is dynamic and is adjusted or configured to take into account at least one property associated with the RADAR's location. In a particular embodiment, the property is related to sea clutter. Sea clutter is a particularly problematic issue in maritime and coastal RADARs, as sea conditions can return a wide range of signals in a RADAR system, depending on e.g. the weather, tides and traffic.

The detection of small, low Signal-to-Clutter, SCR, targets in sea clutter is a challenging problem for RADAR detection. The expected RADAR returns from sea clutter depend on the system parameters of the RADAR system being utilized, and can have drastically different statistical and correlational behaviours for even small changes in parameters i.e. transitioning from mostly-noise like clutter for larger range resolution RADARs to highly spiky, variable, clutter for finer range resolutions, for example. Coupled with the statistical challenge, the Doppler component of sea clutter can also be efficient at masking slower moving targets in Moving Target Detection, MTD, techniques, while also contributing false alarm rates for sudden "spikes" in relative velocity for breaking waves.

Prior art CFAR detectors typically operate by setting a detection threshold based on a measured estimate of the clutter mean at the cell-under-test, CUT. Given some expected statistical behaviour of the clutter, a threshold multiplier is chosen and applied to the estimate of the clutter mean level to produce the threshold which is anticipated to give a fixed false alarm rate. The simplest Cell-Averaging, CA, CFAR can then be modified by choosing the window length over which it gathers information and makes the estimate of the mean clutter level, which can offer a better or worse estimate of the local mean level depending on how correlated the clutter statistics are and the corresponding clutter lengths.

Embodiments of the present invention relate to cognitive RADARs in the sense that the RADARs utilise existing knowledge, both long-term and external knowledge such as of the clutter behaviour and expected detector performance, and short-term gathered knowledge such as previous detections. In the prior art this short term gathered knowledge is generally disregarded and deleted when it is no longer needed for any processing, whereas embodiments of the present invention make use of this to effectively make use if certain details of its environment over time.

As such, embodiments of the present invention attempt to maximize the instantaneous performance of the system by choosing optimal window lengths based on an estimation of the clutter at the CUT vs the clutter previously observed (in past pulses and scans).

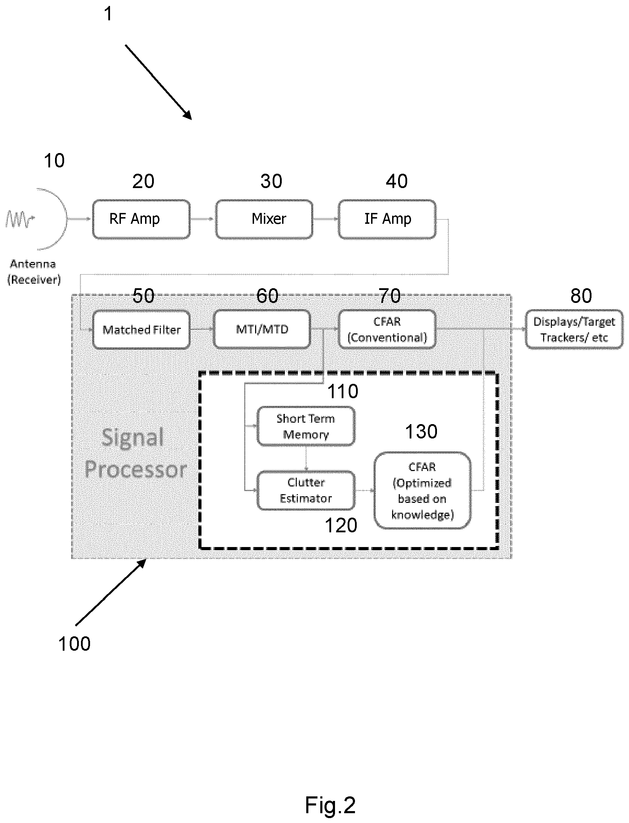

Figure 2 shows a block diagram of an embodiment of the present invention in the form of a RADAR system 1. The RADAR system 1 comprises a conventional (known in the art) antenna 10, RF Amplifier 20, Mixer 30 and IF Amplifier 40 as shown. The RF Amplifier 20 amplifies the normally weak received signal. The result of this amplification is fed into mixer 30, where the effective frequency is lowered to an Intermediate Frequency, IF. This down-converted signal is amplified in IF amplifier 40 to produce a signal which is suitable for processing in Signal Processor 100.

Signal Processor 100 comprises a Matched Filter 50, Moving Target Indication/Detection, MTI/MTD 60, both of which are known in the prior art. The matched filter 50 filters the data using a known signal (the waveform transmitted) to compress the received pulse (improving range resolution) and also improving signal to noise ratio (assuming thermal noise), as it is the most optimal filter for a signal in stochastic noise. MTI/MTD 60 nominally filters out slower moving returns, which are commonly clutter. However, for slower moving targets, and some types of clutter (i.e. sea clutter) there may be fast clutter returns and slow targets, reducing the efficacy of such processing.

The output of the MTI/MTD 60 is input into CFAR 70, in the prior art. The output of this then supplies a display or tracker 80.

A key difference between the prior art RADAR system, which corresponds largely with the elements set out in the preceding paragraph, is the replacement of the known CFAR 70 with the elements labelled 110, 120 and 130, which, together, provide an optimised CFAR function.

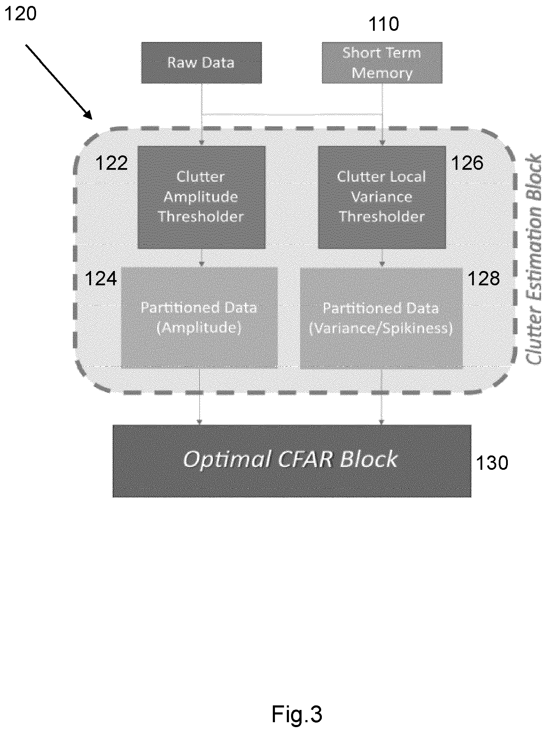

The optimised CFAR function 120, as shown in general form in Figure 2, is able to operate according to a first and/or second method, as will be described in the following. Figure 2 is best understood with reference to Figure 3, which shows a more detailed view of the clutter estimator 120.

Figure 3 essentially shows two alternate or complementary signal paths, as will be described in the following. The two signal paths can be used alone or together, as required.

In Figure 3, the clutter estimator 120 essentially has two parallel paths, each associated with a different technique. The right hand path, incorporating short term memory 110, clutter local variance thresholder 126 and partitioned data block 128 performs a first method, described below.

Whereas CFAR in a prior art RADAR examines solely a current pulse, the first method, forming an embodiment of the present invention, stores the current pulse and a set of previous pulses/scans in the Short Term Memory 110 and uses these to determine mean "recent" statistics of the clutter. The number of previous pulses/scans may be varied as required but should be sufficient to yield a good representation of contemporaneous conditions.

The Clutter Estimator 120 applies a "difference from local mean" calculation from the short term memory 110 for the CUT, based on measured clutter and that stored in the Short Term Memory 110. It also assigns a corresponding CFAR index/choice to use based on where this measurement falls in terms of a chosen threshold. Details of this process will follow. The Clutter Local Variance Thresholder 126 calculates this difference from the local mean and Partitioned Data block 128 then partitions this into one of several possible ranges and assigns an index to this partition. The index references a predefined CFAR window length, which is then used in the CFAR process. Further details are presented later.

The optimised CFAR block 130 operates in broadly the same manner as set out previously, but with the important distinction that its operation varies from CUT to CUT, according to the output from the Clutter Estimator 120.

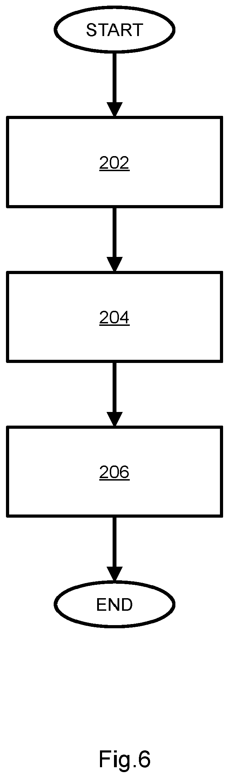

Figure 6 shows, for completeness, a flowchart illustrating steps in the first method. At step 202, a determination is made of a degree of variability in a first number of previous amplitude measurements of received signals.

At step 204, there is assigned a CFAR window length on the basis of the determined degree of variability.

At step 206, a detection threshold for CFAR operation is set on the basis of the assigned window length.

The left hand path, where raw data is fed to clutter amplitude thresholder 122 and then to partitioned data (amplitude) block 124, is associated with a second method described below. The second method can be applied independently from, or simultaneously with, the first method.

In this second method, the clutter is sampled, a CFAR Parameter is chosen, and this is applied to the CFAR for a cell under test. However, the underlying reasoning and method is different to that described already.

In noise, or homogeneously distributed clutter, false alarms occur randomly throughout the whole dataset. However, sea clutter is heterogeneous most of the time and, hence, false alarms can actually be quite focused in a particular region. This generally results in two effects: spurious detections happening relatively frequently in one region and, hence, potentially being confused as a target; and actual detections being obscured by the clutter (making Probability of Detection, Pd, lower).

As such, this second method acts to reduce the chosen threshold (and hence the false alarm rate) specifically for the troublesome region(s). Since false alarms mostly occur in spiky regions of higher amplitude clutter (depending on the whole clutter set) and probability of detection is already low in such regions, the user may opt to locally sacrifice their detection rate but instead accept a decrease in the false alarm rate. This results in a set of results where the final false alarm rate is quite significantly reduced. Pd can vary, depending on where the target occurs within the clutter but, on average, the Pd only takes a small average detriment to performance and with a smaller detriment than would occur if a prior art CFAR detector of a similar "end-result" false alarm rate was chosen instead.

In more detail, clutter is measured for the current pulse and the previous stored pulses in the short term memory 110. The amplitude of a CUT is taken and compared to each other clutter sample to measure which percentile it lies in (e.g. the top 10% or 20-30%, for instance). In other words, a determination is made if it is in the higher amplitude regions of clutter. If it does lie within a defined threshold (i.e. top 20%), then a lower false alarm rate- i.e $10^{-7}$ is used instead of the "normal" false alarm rate of $10^{-5}$. These examples are not definitive and may be adjusted as required. The CFAR parameter referred to earlier, in this case, is the false alarm rate.

The number of thresholds and the regions associated therewith may be expanded to include more thresholds to offer a more gradual increase in threshold as clutter amplitude increases.

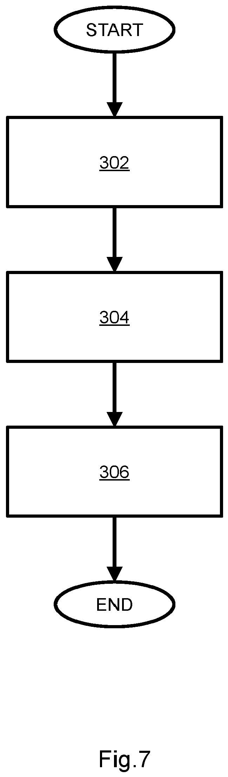

Figure 7 shows, for completeness, a flowchart illustrating steps in the second method. At step 302, the amplitude of the received pulse in the current CUT is compared to a plurality of recently received pulse, stored in short term memory 110.

At step 304, if the amplitude of the pulse in the current CUT lies in an upper range of recently received pulses, then a predefined false alarm rate is selected;

At step 306, the predetermined false alarm rate is applied for the current CUT.

The steps in this this flowchart repeat for each new CUT, so that the false alarm rate is constantly updated based on previously received pulses and the current CUT.

In the case of spiky clutter that is of a generally uniform amplitude, the false alarms will be fairly uniform, as the clutter is homogeneous. This technique does not offer as much of a performance gain. However, as sea clutter is almost always at least somewhat heterogeneous (except in very low sea state levels - where detection is a lot more straightforward anyway), this is not a particular drawback.

The actual quantitative improvement in performance offered by each of the first and second methods depends greatly on the conditions at the time, but in simulations, the first method offers an improvement in terms of a reduction in false alarms of the order of approximately 15dB, whereas the second method offers a smaller increase, of the order of approximately 8dB.

The second method also reduces the minimal SCR of a target needed for a particular detection rate (i.e. Pd=0.5) by around 3-5dB (depending on the clutter statistics and CFAR window lengths available) by reducing the effect of choosing a poorly fitting CFAR window length (by reducing the CFAR Loss intrinsic to each of these window lengths). This allows for smaller targets to be detected more reliably than by a conventional fixed CFAR by using this window length adaption method

Furthermore, the two methods can be combined, and can offer a performance increase that is at least the performance increase of one of the methods alone, if not more, (in terms of false alarm rate reduction alone), as applying the second method could potentially cause a loss of Pd in troublesome regions of clutter. In terms of Pd, if the second method, where a "higher" false alarm rate is chosen initially (than would originally be chosen), this can be designed such that the end-result false alarm rate (i.e. if you were to measure the actual false alarm rate other than the expected false alarm rate as anticipated from the threshold of the original CFAR) can be comparable to an "acceptable" conventional design, while offering a significantly improved detection performance, or set such that the false alarm rate is to be minimized as much as possible while attempting to "reclaim" as much detection performance as possible.

In other words, by combining these two methods, there is an option to choose whether or not the false alarm rate is allowed to locally vary within some global "limit" (set by the conventional false alarm rate) to maximize probability of detection, or to minimize the false alarm rate, and instead attempt to reclaim as much probability of detection as possible (through window length varying) to offset the loss of detection performance expected from such a methodology.

To combine the first and second methods, the CFAR block 130 operates with a variable window length while simultaneously applying a dynamic False Alarm Rate.

Further details of the CFAR optimisation process will now be set out in the context of certain issues with prior art CFAR operation.

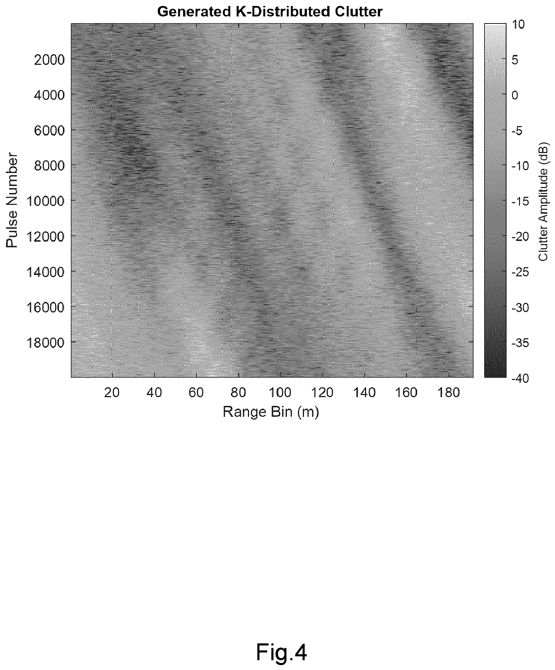

Fig. 4 shows an example dataset, with higher range in clutter amplitudes, with relatively high and low regions lingering for several thousand pulses (~20 seconds. This dataset has been generated for simulation purposes, but accurately reflects real-life data.

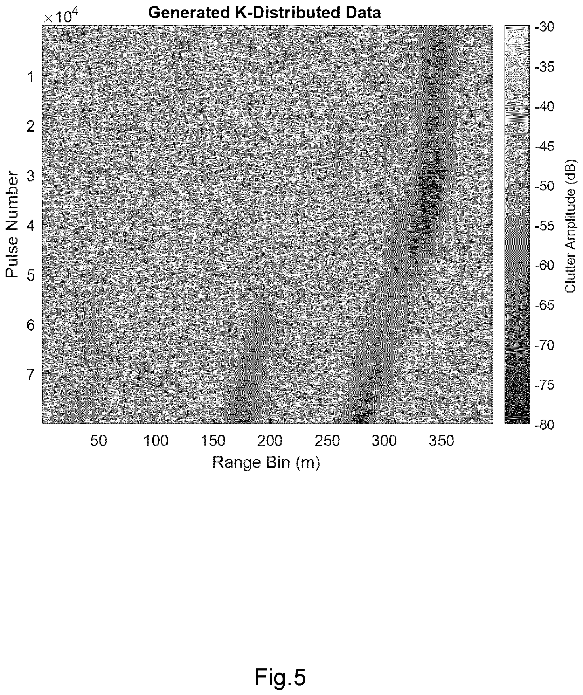

Fig. 5 shows an example dataset, showing opposite relative clutter motion to that shown in Figure 4 and with less range in amplitude (noise-like with occasional spikes) for the majority of the dataset. This, too, has been simulated.

The plots shown in Figures 4 and 5 illustrate two typical plots, but each located towards relatively opposite ends of expected typical conditions.

For embodiments of the invention, an assumption has been made that for small SCR targets, the relative velocity of the target is low enough that MTD would actively inhibit detection performance, and as such MTD/Doppler processing is not performed.

It has been observed that one of the key reasons why a conventional, fixed CFAR suffers a significant CFAR Loss, is due to the CFAR Threshold being set too high, based on an inaccurate measurement of the underlying clutter level. For a standard Cell Averaging CFAR, CA-CFAR, this has been observed to be often due to the cell-averaging window length poorly fitting the data being examined.

In one case, the window length can be set too long. This, for homogenous clutter where there is little to no statistical variation over time or distance, generally offers a better performance as the local mean level can be estimated more accurately. However, it can cause an either under or over-estimated threshold for highly variable clutter statistics, causing not only a reduction in detection performance but potentially a greater false alarm rate. Likewise, a shorter window length can help account for highly variable, heterogeneous clutter conditions, but offers a less reliable estimate in general.

To obtain a measurement of this underlying variability, in an embodiment, a measurement of the recent clutter mean is taken each pulse, which is the mean clutter level over the past 63 pulses of data which, for this case equates to approximately 8 scans duration, or approximately the previous 2 seconds of data. Other durations may be used as required, with these figures being exemplary only. With each new pulse, the oldest stored pulse is deleted from memory, and the previous "current" pulse stored. The data store thus acts as a FIFO.

For the current pulse, the CUT's amplitude (which can be clutter or clutter with a target) is taken and compared to this mean. While there exist methods for calculating the shape parameter of a K-Distribution (and hence the spikiness of the data) they are reliant on large quantities of data to be reliable and accurate and/orsusceptible to varying statistics over the dataset being sampled i.e. the swell of the sea changing over time and the underlying "power" of the RADAR's image of the sea surface changing with it.

As such, a simpler technique is used in the first method forming an embodiment of the invention, measuring the difference of the squares of the CUT and the recent mean clutter, with low values indicating a significant difference between the two levels. Squares of the amplitude are considered, since this tends to accentuate the difference between extremes of measured amplitudes, but linear values or tother variants may equally be used, with appropriate adjustment of the thresholds.

From this measurement the clutter can be "partitioned", by partitioned data block 128, into thresholds of high, medium, and low "variance" based on the percentile value of the CUT compared to every previous measurement made in the recent past, as is demonstrated below:

$$VT(x) = \begin{cases} 2 \ (if \ pct(V_x) > 90\,\%) \\ 1 \ (if \ 90\,\% \geq pct(V_x) > 70\,\%) \\ 0 \ (if \ pct(V_x) \leq 70\,\%) \end{cases}$$

In the above, VT(x) corresponds to the "variance threshold" of the CUT "x" for a measured "variance" $V_x$. In

this case, three thresholds were chosen for simplicity, corresponding to a high variance (2), for the top 10% measurements divergent from the recent mean, medium (1, for the middle-high 20%) and low variance (0, anything in the bottom 70%).

The numerical values 2, 1, 0 referred to above are reference indices and relate to a particular CFAR model or window length to be used in each case.

The actual specifics of this partitioning process i.e. the number and value of the thresholds can be changed, and in effect the configuration of these partitions, applied by partitioning block 128, may be hard wired into the RADAR system or may be configured by an operator, as required. In the example embodiment shown here, the partitions have been hard-coded to better understand and demonstrate the potential for performance gain for even a less than ideal/optimal system, and to demonstrate the potential for diminished gains for a poorly fitting threshold parameter set.

The Raw Data input is the current amplitude measurements, while the Short Term Memory 100 comprises the recent measurements (e.g. 63 pulses) of the scene. The Optimal CFAR Block 130 is then operable to choose the appropriate CFAR design based on these supplied measurements, with longer window lengths corresponding to lower variance threshold values, and shorter window lengths corresponding to higher variance threshold values. The system, in the first method, then chooses a corresponding CFAR window length based on this partition, as indicated by the numerical index assigned as part of the thresholding activity. In this way, the CFAR function is dynamically adjusted in terms of its window length, such that contemporaneous or near-contemporaneous data is used in determining a suitable threshold level which is adapted for actual real-world conditions.

Embodiments of the invention have been simulated using simulated sea clutter, which is modelled using a technique whereby a correlated normally distributed surface, from which a correlated Gamma surface is produced. This is known to produce a good representation of real-life conditions and so allows results to be tested with known reliable data.

This Gamma surface is utilized to modulate randomly generated Rayleigh samples (via use as the scale parameter) to generate a correlated surface of K-Distributed samples, for some specific shape and scale parameter. The K-Distribution is a well-established model of sea-clutter statistics, as it can be used to model both highly spiky (long-tailed) and noise-like sea clutter distributions. While more robust models exist, the clarity of the underlying physics "modelled" by this distribution and the simplicity of a two-parameter distribution allow for a variety of simulated clutter conditions to be modelled, as can be seen in Figures 4 and 5. These simulations can then be modified to simulate a revisit time (i.e. scanning RADAR) and have target(s) added with some chosen velocity/acceleration and mean signal to clutter ratios.

It has been shown in simulations that embodiments of the present invention are able to achieve better performance than prior art RADAR systems which make use of a static CFAR arrangement. By comparing the local clutter with the previously measured recent data and using this knowledge to optimally set CFAR window length, a better CFAR process is achieved.

The aforementioned first and second methods are provided to address different issues in dealing with sea clutter, in particular. By use of one of the two methods, in a particular situation, an improvement can be expected in CFAR performance and, so, overall RADAR performance. By combining the two methods, as set out, an even greater performance improvement can be expected but, in any event, the performance improvement should at least equal the performance improvement offered by any one of the two methods operating alone.

**Claims**

1. A RADAR system comprising a Constant False Alarm Rate, CFAR, function, wherein the CFAR function is arranged such that a detection threshold is determined at least partly on the basis of a window length which is of a variable length and the variable length is determined on the basis of a degree of variability in a first number of previous amplitude measurements of received signals.

2. The RADAR system of claim 1 wherein the degree of variability is classified on the basis of one or more thresholds.

3. The RADAR system of claim 2 wherein the one or more thresholds are arranged to be one of: fixed at time of configuration or variable under the control of an operator.

4. The RADAR system of claim 2 or 3 wherein the CFAR function is arranged such that a square of an amplitude value of a Cell Under Test, CUT, is compared with squares of the values of the first number of previous amplitude measurements and the degree of variability is classified as high, medium or low according to three thresholds.

5. The RADAR system of claim 2 wherein the one or more thresholds are fixed and are arranged such that: a high degree of variability is determined if a top 10% of measurements are divergent from a recent mean; a medium degree of variability is determined if a middle-high 20% of measurements are divergent from the recent mean; and a low degree of variability is determined if a bottom 70% of measurements are divergent from the recent mean.

6. The RADAR system of any preceding claim wherein the window length is arranged to be longer for a relatively lower degree of variability, and shorter for a relatively higher degree of variability.

7. The RADAR system of any preceding claim wherein the CFAR function is further arranged such that an amplitude of a received pulse in a current Cell Under Test, CUT, is compared to a plurality of recently received pulses to determine if the current CUT lies in an upper range of recently received pulses and, if so, a predetermined false alarm rate is applied for the current cell, wherein the predetermined false alarm rate is lower than would be applied if the current CUT did not lie in the upper range.

8. A method of CFAR signal processing in a RADAR system, comprising the steps of:

determining a degree of variability in a first number of previous amplitude measurements of received signals;
assigning a CFAR window length on the basis of the determined degree of variability;
setting a detection threshold for CFAR operation on the basis of the assigned window length.

9. The method of claim 8 wherein the degree of variability is classified on the basis of one or more thresholds.

10. The method of claim 9 wherein the one or more thresholds are arranged to be one of: fixed at time of configuration or variable under the control of an operator.

11. The method of claim 9 or 10 wherein a square of an amplitude value of a Cell Under Test, CUT, is compared with squares of the values of the first number of previous amplitude measurements and the degree of variability is classified as high, medium or low according to three thresholds.

12. The method of claim 9 wherein the one or more thresholds are fixed and are arranged such that: a high degree of variability is determined if a top 10% of measurements are divergent from a recent mean; a medium degree of variability is determined if a middle-high 20% of measurements are divergent from the recent mean; and a low degree of variability is determined if a bottom 70% of measurements are divergent from the recent mean.

13. The method of any of claims 8 to 12 wherein the window length is arranged to be longer for a relatively lower degree of variability, and shorter for a relatively higher degree of variability.

14. The method of any of claims 8 to 13, further comprising the steps of comparing an amplitude of a received pulse in a current CUT with a plurality of recently received pulses, determining if the amplitude of the pulse in the current CUT lies in an upper range of recently received pulses and if it so determined, selecting a predefined false alarm rate is selected which is lower than would be applied if the current CUT did not lie in the upper range.

Detection Exceeds Threshold

Threshold

Added Together

Sliding Window

Fig.1

1

10

20      30      40

| RF Amp | → | Mixer | → | IF Amp |

Antenna
(Receiver)

50      60      70           80

| Matched Filter | → | MTI/MTD | → | CFAR (Conventional) | → | Displays/Target Trackers/ etc |

Signal Processor

110

Short Term Memory

130

Clutter Estimator

CFAR (Optimized based on knowledge)

120

100

Fig.2

120

110

Raw Data

Short Term
Memory

122
Clutter
Amplitude
Thresholder

126
Clutter Local
Variance
Thresholder

124
Partitioned Data
(Amplitude)

128
Partitioned Data
(Variance/Spikiness)

*Clutter Estimation Block*

Optimal CFAR Block

130

Fig.3

**Generated K-Distributed Clutter**

Fig.4

Fig.5

```
        ┌─────────┐
        │  START  │
        └─────────┘
             │
             ▼
    ┌─────────────────┐
    │                 │
    │       202       │
    │                 │
    └─────────────────┘
             │
             ▼
    ┌─────────────────┐
    │                 │
    │       204       │
    │                 │
    └─────────────────┘
             │
             ▼
    ┌─────────────────┐
    │                 │
    │       206       │
    │                 │
    └─────────────────┘
             │
             ▼
        ┌─────────┐
        │   END   │
        └─────────┘
```

Fig.6

```
        ┌──────────┐
        │  START   │
        └────┬─────┘
             │
             ▼
    ┌────────────────┐
    │                │
    │      302       │
    │                │
    └────────┬───────┘
             │
             ▼
    ┌────────────────┐
    │                │
    │      304       │
    │                │
    └────────┬───────┘
             │
             ▼
    ┌────────────────┐
    │                │
    │      306       │
    │                │
    └────────┬───────┘
             │
             ▼
        ┌──────────┐
        │   END    │
        └──────────┘
```

Fig.7

Europäisches
Patentamt

European
Patent Office

Office européen
des brevets

# EUROPEAN SEARCH REPORT

Application Number

EP 22 27 5093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/201054 A1 (WANG JIAN [CA] ET AL) 8 August 2013 (2013-08-08) * abstract; figures 1, 4, 6-7 * * column 54 - column 80 * ----- | 1-14 | INV. G01S7/292 |
| A | HINZ J O ET AL: "Scan-by-scan averaging and adjacent detection merging to improve ship detection in HFSWR", SIGNAL PROCESSING AND COMMUNICATION SYSTEMS (ICSPCS), 2012 6TH INTERNATIONAL CONFERENCE ON, IEEE, 12 December 2012 (2012-12-12), pages 1-7, XP032383459, DOI: 10.1109/ICSPCS.2012.6507941 ISBN: 978-1-4673-2392-5 * the whole document * ----- | 1-14 | |
| A | SHI SAI-NAN ET AL: "Low-Velocity Small Target Detection With Doppler-Guided Retrospective Filter in High-Resolution Radar at Fast Scan Mode", IEEE TRANSACTIONS ON GEOSCIENCE AND REMOTE SENSING, IEEE, USA, vol. 57, no. 11, 1 November 2019 (2019-11-01), pages 8937-8953, XP011755602, ISSN: 0196-2892, DOI: 10.1109/TGRS.2019.2923790 [retrieved on 2019-10-29] * the whole document * ----- | 1-14 | TECHNICAL FIELDS SEARCHED (IPC) G01S |

The present search report has been drawn up for all claims

| Place of search | Date of completion of the search | Examiner |
|---|---|---|
| Munich | 8 December 2022 | López de Valle, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 27 5093

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2022

| Patent document cited in search report | Publication date | Patent family member(s) | Publication date |
|---|---|---|---|
| US 2013201054 A1 | 08-08-2013 | CA 2774377 A1<br>US 2013201054 A1 | 02-08-2013<br>08-08-2013 |

EPO FORM P0459

For more details about this annex : see Official Journal of the European Patent Office, No. 12/82